# FASCICULE DE BREVET EUROPEEN

(11) **EP 3 200 986 B1**
(45) Date de publication et mention de la délivrance du brevet: **25.07.2018**
(21) Numéro de dépôt: 15784076.0
(22) Date de dépôt: 30.09.2015
(51) Int. Cl.: B29C 70/48, B29C 45/76, B29C 45/78, B29C 45/77, B29C 39/00, B29C 45/00, B29C 35/02, B29C 45/02, B29K 21/00, B29K 63/00

(54) **PROCÉDÉ DE MOULAGE D'UNE RÉSINE THERMODURCISSABLE.**
VERFAHREN ZUM FORMEN EINES WÄRMEHÄRTENDEN HARZES
PROCESS FOR MOULDING A THERMOSETTING RESIN.

(30) Priorité: 30.09.2014 FR 1459231
(43) Date de publication de la demande: 09.08.2017
(73) Titulaire: Safran Aircraft Engines, 75015 Paris (FR)
(72) Inventeur: TECHER, Marc-Emmanuel, F-77550 Moissy-cramayel Cedex (FR); JAUSSAUD, Raoul, F-77550 Moissy-cramayel Cedex (FR)
(74) Mandataire: Verrue, Jacques
(86) Numéro de dépôt international: PCT/FR2015/052609
(87) Numéro de publication internationale: WO 2016/051082

(56) Documents cités:
- EP-A- 0 068 512

## Description

### DOMAINE TECHNIQUE

Le présent exposé concerne un procédé de moulage d'une résine thermodurcissable.

Un tel procédé peut être utilisé pour la fabrication de pièces composites et, notamment, la fabrication de pièces composites par moulage par transfert de résine ou "Resin Transfer Molding" (en abrégé "RTM") en langue anglaise.

### ARRIERE PLAN

Le procédé de moulage par transfert de résine, ou procédé RTM, est un procédé connu utilisé pour la réalisation de pièces en matériaux composites (fibres-résine) à haut rapport résistance sur masse. De façon classique, le procédé RTM comprend les opérations suivantes:
- préparation d'une préforme fibreuse par tissage de fibres;
- disposition de la préforme fibreuse dans un moule d'injection;
- injection de la résine à l'état liquide dans le moule pour remplir celui-ci et imprégner la préforme fibreuse;
- mise sous pression de la résine injectée et polymérisation de la résine par chauffage.

Un tel procédé est connu, par exemple, du document EP 0 068 512.

Après démoulage on obtient une pièce composite comprenant une structure de renfort fibreuse noyée dans une matrice de résine polymérisée. La forme extérieure de cette pièce correspond à la forme prise par la résine dans la cavité du moule.

Les résines utilisées sont très fluides de manière à bien pénétrer entre les différentes fibres de la préforme, même lorsqu'elles sont injectées sous une pression réduite. Pendant la polymérisation, sous l'effet de la chaleur, la résine injectée passe successivement de l'état liquide à l'état gélifié et à l'état solide.

Pour éviter ou limiter les défauts et porosités dans la pièce, liés au phénomène de dégazage de la résine pendant la polymérisation, il est connu de maintenir la résine sous pression jusqu'à la polymérisation complète de la pièce. Pour ce faire, il est possible d'utiliser un dispositif de mise sous pression comme, par exemple, celui décrit dans le document de brevet WO 2013/068666 A1. Bien que cette solution soit satisfaisante pour les défauts et porosités de taille moyenne, elle peut s'avérer difficile à mettre en oeuvre pour les défauts et porosités de petite taille (e.g. de taille inférieure à 5 millimètres). En effet, dans ce dernier cas, le niveau de pression exigé pour la résine dépasse souvent la capacité des dispositifs couramment utilisés, ce qui oblige à utiliser d'autres dispositifs, plus onéreux, et à adapter les installations existantes à ces nouveaux dispositifs.

Il existe donc un besoin pour une nouvelle solution.

### PRESENTATION GENERALE

Le présent exposé concerne un procédé de moulage d'une résine thermodurcissable, par exemple du type de celui d'une résine époxy PR520.

Dans une première phase de ce procédé, on peut réaliser les opérations suivantes:
- on remplit un premier moule avec une résine thermodurcissable, tout en faisant évoluer la température de la résine selon un premier programme de température, sans dépasser une température de transition vitreuse, notée "Tg", de la résine,
- après remplissage du premier moule, on met la résine sous pression tout en faisant évoluer la température de la résine selon un deuxième programme de température, sans dépasser la Tg de la résine, et on détecte une chute de la pression exercée par la résine sur le moule en repérant l'instant t1 où cette pression présente une rupture de pente.

Dans une deuxième phase du procédé, on peut réaliser les opérations suivantes:
- on remplit un deuxième moule, analogue au premier moule, avec la résine thermodurcissable, tout en faisant évoluer la température de la résine selon le premier programme de température,
- après remplissage du deuxième moule, on met la résine sous pression tout en faisant évoluer la température de la résine selon le deuxième programme de température jusqu'à un instant t2 sensiblement égal à t1 et, à partir de l'instant t2, on augmente la température de la résine en dépassant la Tg de la résine.

La première phase du procédé a pour objectif de repérer l'instant t1. Les inventeurs supposent que la chute de pression observée à cet instant correspond à un certain degré d'avancement de la réaction de polymérisation de la résine. Ils supposent qu'à partir de ce degré d'avancement, la résine se contracte et exerce donc moins de pression sur le moule. La pression exercée par la résine sur le moule peut être mesurée à l'aide d'un ou de plusieurs capteurs de pression présents sur la paroi de la cavité du moule.

La deuxième phase du procédé consiste à reproduire les conditions de moulage de la première phase jusqu'à l'instant t2, proche de t1, et, à partir de t2, à augmenter la température de la résine au-delà de la Tg pour augmenter la mise sous pression de la résine. Par exemple, l'instant t2 est compris dans l'intervalle de temps [t1 - 10min ; t1 + 10min] ou dans l'intervalle [t1 - (t1-t0)/2 ; t1 + (t1-t0)/2].

En effet, lors de leurs recherches, les inventeurs ont constaté que le fait de chauffer la résine au-dessus de sa Tg, alors que la résine avait atteint un certain degré de polymérisation (repéré par l'instant t1, voire l'intervalle de temps autour de t1), permettait d'obtenir une augmentation significative (on parle ci-après de "pic de pression") de la pression exercée par la résine sur le moule. Les inventeurs supposent que ce pic de pression est lié à l'augmentation importante du coefficient d'expansion thermique de la résine lorsque la résine passe au-dessus de sa Tg, cette augmentation s'accompagnant d'une forte augmentation du volume de la résine lorsque la température augmente. Le moule résistant à cette augmentation de volume, la pression à laquelle la résine est soumise devient alors importante.

Le "pic de pression" déclenché lors de la deuxième phase du procédé permet d'augmenter la pression à laquelle la résine est soumise et, ainsi, d'éviter ou de limiter la formation de défauts et de porosités lors de la polymérisation de la résine. Cette mise sous pression de la résine s'applique depuis l'intérieur du moule, ce qui permet d'obtenir une répartition homogène de la pression sur la pièce (i.e. la pression est sensiblement uniforme en tout point de la pièce) et d'éviter les pertes de charge rencontrées avec les dispositifs de mise sous pression conventionnels. Ce pic de pression permet également d'atteindre des pressions élevées sans avoir besoin d'équipement spécifique. Le procédé proposé permet ainsi d'éviter ou de limiter les défauts et porosités de petite taille dans la pièce moulée, sans avoir à changer les installations et équipements de moulage conventionnels.

Dans le présent exposé, on entend désigner par "Tg" la température de transition vitreuse mesurée selon la méthode de mesure par calorimétrie différentielle à balayage selon la norme ASTM E1356.

La deuxième phase du procédé consiste, dans un premier temps, à reproduire les conditions de moulage de la première phase. Pour cette raison, le deuxième moule est avantageusement choisi analogue ou identique au premier moule. En particulier, le premier et le deuxième moule peuvent n'être qu'un seul moule. Dans ce cas, le premier moule est vidé à l'issue de la première phase du procédé afin de pouvoir être réutilisé dans la deuxième phase. Pour les mêmes raisons, s'il est décidé de mouler la résine sur une structure de renfort disposée dans le premier moule lors de la première phase du procédé, une structure de renfort analogue ou identique est disposée dans le deuxième moule de la deuxième phase du procédé.

Outre les caractéristiques qui viennent d'être mentionnées plus haut, le procédé proposé peut présenter une ou plusieurs des caractéristiques parmi les suivantes, considérées isolément ou selon des combinaisons techniquement possibles:
- le deuxième programme de température est un programme isotherme;
- selon le deuxième programme de température, la température de la résine est maintenue à une valeur comprise dans l'intervalle de température [Tg - 20°C ; Tg -10°C] ;
- à l'instant t2, la vitesse d'augmentation de la température de la résine est comprise entre 0,56°C/min et 3,3°C/min (entre 1°F/min et 6°F/min), de préférence entre l,6°C/min et 3,3°C/min (entre 3°F/min et 6°F/min);
- la résine thermodurcissable est une résine époxy, notamment de type PR520 ;
- le procédé est utilisé pour la fabrication de pièces composites par moulage par transfert de résine ;
- la durée t1-t0 est comprise entre 1 minute et 2 heures, notamment comprise entre 5 et 60 minutes, notamment comprise entre 10 et 50 minutes, notamment comprise entre 20 et 40 minutes, notamment comprise entre 25 et 35 minutes, et peut notamment valoir sensiblement 30 minutes.

Le présent exposé concerne également un procédé de moulage d'une résine thermodurcissable de type résine époxy, dans lequel :
on remplit un moule avec la résine thermodurcissable, tout en faisant évoluer la température de la résine selon un premier programme de température, sans dépasser une Tg de la résine,
après remplissage du moule, on augmente la température de la résine en dépassant la Tg de la résine,
et dans lequel après le remplissage du moule et avant l'augmentation de la température de la résine, on met la résine sous pression tout en faisant évoluer la température de la résine selon un deuxième programme de température, sans dépasser la Tg de la résine, pendant une durée prédéterminée.

La durée prédéterminée peut être prédéterminée par une méthode similaire à la première phase du procédé précédemment décrit ; dans ce cas, la durée prédéterminée est sensiblement égale à la durée séparant la fin du remplissage du moule de l'instant t1 de chute de pression. Cependant, au cours de la détermination de la durée prédéterminée, il est possible d'augmenter la température au-delà de la Tg de la résine après remplissage du moule, sans attendre l'instant de chute de pression. En effet, dépasser ou non la Tg après le remplissage et avant l'instant de chute de pression t1 n'a pas de conséquence étant donné le degré de polymérisation peu élevé avant l'instant t1. Par conséquent, l'instant t1 de chute de pression reste identique quel que soit le programme de température appliqué entre la fin du remplissage du moule et l'instant t1.

D'autres caractéristiques et avantages du procédé apparaîtront à la lecture de la description détaillée qui suit, d'un exemple de réalisation du procédé proposé.

### BRÈVE DESCRIPTION DES DESSINS

Le procédé et ses avantages seront mieux compris à la lecture de la description détaillée qui suit, de modes de réalisation de l'invention donnés à titre d'exemples non limitatifs. Cette description se réfère aux dessins annexés, sur lesquels :
- la figure 1 représente l'évolution de la température et de la pression lors de la première phase d'un procédé de moulage selon un mode de réalisation de l'invention ;
- la figure 2 représente l'évolution de la température et de la pression lors de la deuxième phase d'un procédé de moulage selon un mode de réalisation de l'invention
- la figure 3 représente l'évolution de la température et de la pression lors d'un procédé de moulage selon l'art antérieur.

### DESCRIPTION DETAILLEE D'EXEMPLE(S)

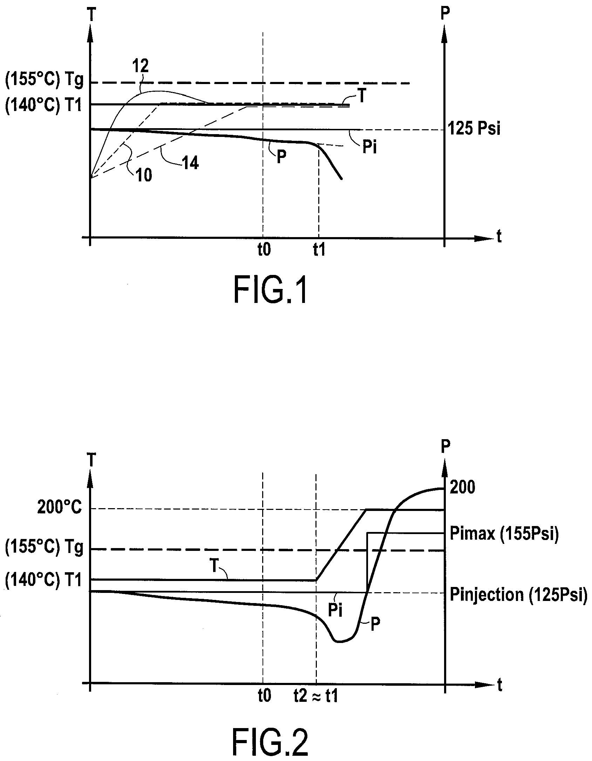

Un exemple de réalisation est décrit en détail ci-après, en référence aux figures 1 et 2. Cet exemple illustre les caractéristiques et les avantages de l'invention. Il est toutefois rappelé que l'invention ne se limite pas à cet exemple.

Dans cet exemple, la résine thermodurcissable peut être une résine époxy ayant une Tg inférieure à sa température de cuisson. Selon un exemple, la résine peut avoir au moins l'une des propriétés suivantes : être une résine classe 180°C, être améliorée en ténacité, avoir une Tg égale à environ 155°C. Dans l'exemple qui sera détaillé par la suite, la résine utilisée, de type PR 520, possède ces trois propriétés.

Selon une première phase du procédé, représentée sur la figure 1, on remplit un moule avec la résine époxy. Pendant le remplissage, on fait évoluer la température de la résine selon un premier programme de température, sans dépasser la Tg de la résine. Selon un exemple, on a représenté le premier programme de température comme un programme isotherme (i.e. à température constante) sur la figure 1. De manière générale, pour chauffer la résine, on utilise des éléments chauffants tels que connus par l'homme du métier. Toutefois, le premier programme de température peut être un programme non-isotherme, par exemple l'un des programmes 10, 12, 14 représentés sur la figure 1. Le programme 10 comporte une montée en température uniforme et un palier. Le programme 12 comporte une montée en température, ici au-delà de la température Tl, puis une descente en température, ici une légère descente jusqu'à la température T1. Le programme 14 comporte une montée en température uniforme jusqu'à la température T1. Comme indiqué précédemment, pour chacun de ces autres exemples de programmes 10, 12, 14, la température reste inférieure à la Tg.

Pour remplir le moule, on peut utiliser un injecteur du type de ceux couramment utilisés dans les procédés RTM et, par exemple, un injecteur permettant d'appliquer une pression Pi (pression d'injection) de 0,86 MPa (125 Psi) sur la résine pour la faire pénétrer dans le moule.

A l'issue de cette première étape de la première phase du procédé, le moule est rempli de résine époxy, cette résine étant à une température T1 d'environ 140°C (inférieure à la température Tg de la résine, ici égale à 155°C). On repère un instant t0 correspondant à la fin de ladite première étape. A cet instant t0, le degré de polymérisation de la résine peut valoir environ 20 à 30%. Commence alors la deuxième étape de la première phase du procédé. L'injecteur n'est pas arrêté entre la première et la deuxième étape, de sorte qu'il ne cesse de pousser la résine dans le moule, ce qui permet de mettre la résine sous pression (dans l'exemple, la pression exercée sur la résine par l'injecteur est de 0,86 MPa). A son tour, la résine exerce sur le moule une certaine pression. Cette pression P diffère de la pression exercée par l'injecteur du fait de l'augmentation du volume de la résine à l'intérieur du moule, et éventuellement des pertes de charge entre l'injecteur et le moule. La pression P exercée par la résine sur le moule est mesurée à l'aide d'un ou plusieurs capteurs disposés sur la face intérieure, i.e. la paroi de la cavité, du moule. Lorsque plusieurs capteurs sont utilisés, on fait la moyenne des mesures.

Dans la deuxième étape de la première phase, c'est-à-dire à partir de t0, on fait évoluer la température de la résine selon un deuxième programme de température, sans dépasser la Tg de la résine, et on détecte une chute de la pression exercée par la résine sur le moule en repérant l'instant t1 où cette pression P présente une rupture de pente, notamment une première rupture de pente. La chute de pression est due, notamment, au retrait de la résine dans le moule au cours de la solidification de la résine (contraction précédemment expliquée). A l'instant t1, le degré de polymérisation de la résine peut valoir environ 50% à 60%.

Le deuxième programme de température peut être un programme isotherme, c'est-à-dire un programme consistant à maintenir la température de la résine à une valeur constante, notamment inférieure à Tg, par exemple environ 140°C. Le cas d'un deuxième programme de température isotherme est représenté sur la figure 1. Dans ce cas, on constate que la pression exercée par la résine sur le moule commence à chuter très sensiblement (rupture de pente) environ 30 minutes (min) à compter du début de la deuxième étape et que la pression atteint un minimum à 33 min environ. L'instant t1 correspond donc à 30 min à compter du début de la deuxième étape (i.e. 30 minutes après le début de la deuxième étape), pour la résine utilisée. Alternativement, l'instant t1 peut être repéré comme l'instant auquel la pression atteint un minimum.

Cependant, dans le cas où le premier programme de température et le deuxième programme de température sont deux programmes isothermes, ces deux programmes n'ont pas nécessairement la même température de maintien.

En outre, le deuxième programme de température peut également être un programme non-isotherme quelconque. Le deuxième programme de température peut, par exemple, comporter une montée en température sans dépasser la température de transition vitreuse Tg de la résine, puis un palier à une température ne dépassant pas la température de transition vitreuse Tg de la résine.

Le programme de température suivi après l'instant t1 est sans réelle importance, puisque la première phase du procédé a pour seul objectif de repérer l'instant t1 ; c'est pourquoi le programme de température suivi après l'instant t1 n'a été que partiellement représenté sur la figure 1. Par exemple, après l'instant t1, on peut suivre un programme de température permettant de faire polymériser la résine, ce qui permet de démouler la pièce moulée et de réutiliser le moule pour la deuxième phase du procédé.

La deuxième phase du procédé va maintenant être décrite en référence à la figure 2. Dans une première étape de la deuxième phase du procédé, on remplit un deuxième moule (qui peut être le premier moule, ou un autre moule identique ou analogue au premier moule) avec la même résine époxy en suivant le premier programme de température. Dans une seconde étape de la deuxième phase du procédé, après remplissage du deuxième moule, on met la résine sous pression en suivant le deuxième programme de température jusqu'à un instant t2 sensiblement égal à t1. Selon des variantes, l'instant t2 peut être compris dans l'intervalle de temps [t1 - 10min ; t1 + 10min] ou dans l'intervalle [t1 - (t1-t0)/2 ; t1 + (t1-t0)/2]. La deuxième phase consiste donc à reproduire les conditions de moulage de la première phase jusqu'à l'instant t2.

Dans l'exemple, l'instant t2 est compris entre 20 min (i.e. 30-10) et 40 min (i.e. 30+10) après le début de la deuxième étape de la deuxième phase du procédé. En particulier, t2 est exactement égal à t1. On notera que la première étape de la première phase du procédé et la première étape de la deuxième phase du procédé ont sensiblement les mêmes durées.

A partir de l'instant t2, selon une troisième étape de la deuxième phase du procédé, dite étape de cuisson, on augmente la température de la résine jusqu'à dépasser la Tg (155°C dans le cas de la résine époxy utilisée). Par exemple, lors de la cuisson, la température de la résine peut être augmentée progressivement jusqu'à 200°C en 20 min. Selon l'exemple, la température augmente dans le temps suivant une rampe ou vitesse d'augmentation de la température de 5°F/min à 6°F/min (entre 2,8°C/min et 3,3°C/min). On constate alors une forte augmentation de la pression exercée par la résine sur le moule (ou "pic de pression"), remarquable par le fait que cette pression excède largement la pression exercée par l'injecteur sur la résine.

Pour accompagner cette augmentation de pression, comme illustré sur la figure 2, on peut augmenter la pression Pi exercée par l'injecteur sur la résine. Par exemple, on peut augmenter la pression de l'injecteur à Pimax = 155 Psi (1,07 MPa) quelques minutes après l'instant t1 et, notamment, lorsque la pression exercée par la résine sur le moule atteint 125 Psi (0,86 MPa). Dans cet exemple, on constate que la pression P exercée par la résine sur le moule excède largement la pression d'injection, ici 155 Psi (1,07 MPa) : cette pression atteint 200 Psi (1,38 MPa) au sommet du pic de pression observé.

La pression P exercée par la résine sur le moule excédant la pression distribuée par l'injecteur, il est préférable, dans le cas d'un injecteur à piston classique, de refermer la vanne à l'entrée du moule afin d'éviter un recul du piston de l'injecteur à partir du moment où la pression P exercée par la résine commence à dépasser la pression Pi distribuée par l'injecteur.

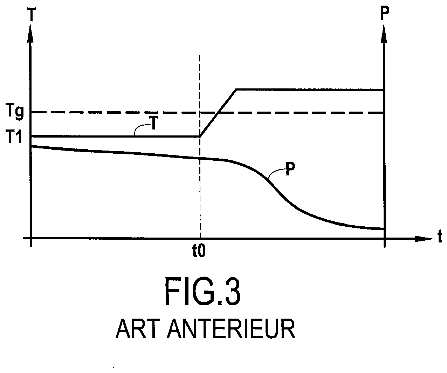

A titre de comparaison, on a représenté sur la figure 3 un procédé de moulage selon l'art antérieur. La courbe de température T est une courbe de consigne de température, tandis que la courbe de pression P représente la pression effectivement exercée par la résine sur le moule.

Selon une première étape du procédé, on remplit le moule jusqu'à un instant t0 auquel le remplissage du moule atteint un niveau prédéterminé. Ensuite, la température est augmentée au-dessus de la Tg afin d'opérer la cuisson de la résine. On constate expérimentalement une diminution de la pression exercée par la résine sur le moule, qui s'explique notamment par le retrait pendant la cuisson et par la formation de liaison tridimensionnelle durant la polymérisation.

En comparant les figures 2 et 3, on constate que le procédé selon le mode de réalisation décrit introduit un retard entre la fin de la première étape et l'accroissement de température au-delà de Tg. Le retard est ici d'une durée t2-t0. Le retard correspond à la durée pendant laquelle est appliqué le deuxième programme de température (ici isotherme). Ce retard permet de déclencher l'augmentation de température au-delà de la Tg lorsque la résine a atteint un degré de polymérisation suffisant pour que l'augmentation du coefficient d'expansion thermique de la résine soit significative et permette l'obtention du pic de pression précédemment décrit. A l'inverse, dans le cas de l'art antérieur représenté sur la figure 3, l'augmentation de température est déclenchée alors que le degré de polymérisation de la résine est encore trop bas, ce qui ne permet pas d'obtenir le pic de pression précité.

L'exemple de réalisation décrit dans le présent exposé est donné à titre illustratif et non limitatif, une personne du métier pouvant facilement, au vu de cet exposé, adapter cet exemple de réalisation ou en envisager d'autres, tout en restant dans la portée de l'invention.

En particulier, les moyens permettant d'injecter la résine dans le moule, de maintenir la résine sous pression ou de chauffer la résine peuvent être différents de ceux décrits ci-dessus.

Par ailleurs, l'expression "comprenant un" doit être comprise comme étant synonyme de "comprenant au moins un", sauf si le contraire est spécifié.

## Revendications

1. Procédé de moulage d'une résine thermodurcissable, dans lequel, dans une première phase :
on remplit un premier moule avec une résine thermodurcissable, tout en faisant évoluer la température de la résine selon un premier programme de température, sans dépasser une température de transition vitreuse Tg de la résine,
après remplissage du premier moule (t0), on met la résine sous pression tout en faisant évoluer la température de la résine selon un deuxième programme de température, sans dépasser la température de transition vitreuse Tg de la résine, et on détecte une chute de la pression exercée par la résine sur le moule en repérant l'instant t1 où cette pression présente une rupture de pente, et
dans une deuxième phase :
on remplit un deuxième moule avec la résine thermodurcissable, tout en faisant évoluer la température de la résine selon le premier programme de température,
après remplissage du deuxième moule (t0), on met la résine sous pression tout en faisant évoluer la température de la résine selon le deuxième programme de température jusqu'à un instant t2 sensiblement égal à t1, et à partir de l'instant t2, on augmente la température de la résine en dépassant la température de transition vitreuse Tg de la résine.

2. Procédé selon la revendication 1, dans lequel l'instant t2 est compris dans l'intervalle de temps [t1 - 10min ; t1 + 10min].

3. Procédé selon la revendication 1 ou 2, dans lequel le deuxième programme de température est un programme isotherme.

4. Procédé selon l'une quelconque des revendications 1 à 3, dans lequel, selon le deuxième programme de température, la température de la résine est maintenue à une valeur comprise dans l'intervalle de température [Tg -20°C ; Tg -10°C].

5. Procédé selon l'une quelconque des revendications 1 à 4, dans lequel, à l'instant t2, la vitesse d'augmentation de la température de la résine est comprise entre 0,56°C/min et 3,3°C/min.

6. Procédé selon l'une quelconque des revendications 1 à 5, dans lequel la résine thermodurcissable est une résine époxy.

7. Procédé selon la revendication 6, dans lequel la résine thermodurcissable possède au moins l'une des propriétés suivantes : être une résine classe 180°C, être améliorée en ténacité, avoir une Tg égale à environ 155°C.

8. Procédé selon l'une quelconque des revendications 1 à 7, dans lequel le deuxième moule est analogue ou identique au premier moule.

9. Procédé selon l'une quelconque des revendications 1 à 8, dans lequel la durée t1-t0 vaut sensiblement 30 minutes.

## Patentansprüche

1. Verfahren zum Formen eines wärmehärtenden Harzes, wobei in einer ersten Phase:
eine erste Form mit einem wärmehärtenden Harz gefüllt wird, bei Veranlassung der Entwicklung der Temperatur des Harzes gemäß einem ersten Temperaturprogramm, ohne eine Glasübergangstemperatur Tg des Harzes zu überschreiten,
nach dem Befüllen der ersten Form (t0) das Harz einem Druck ausgesetzt wird, bei Veranlassung der Entwicklung der Temperatur des Harzes gemäß einem zweiten Temperaturprogramm, ohne die Glasübergangstemperatur Tg des Harzes zu überschreiten, und ein von dem Harz auf die Form ausgeübter Druckabfall bei Feststellung des Zeitpunkts t1, zu dem dieser Druck eine Verlaufsänderung aufweist, ermittelt wird, und
in einer zweiten Phase:
eine zweite Form mit dem wärmehärtenden Harz gefüllt wird, bei Veranlassung der Entwicklung der Temperatur des Harzes gemäß dem ersten Temperaturprogramm,
nach dem Befüllen der zweiten Form (t0) das Harz einem Druck ausgesetzt wird, bei Veranlassung der Entwicklung der Temperatur des Harzes gemäß dem zweiten Temperaturprogramm, bis zu einem Zeitpunkt t2, der etwa t1 entspricht, und ab dem Zeitpunkt t2 die Temperatur des Harzes über die Glasübergangstemperatur Tg des Harzes erhöht wird.

2. Verfahren nach Anspruch 1, wobei der Zeitpunkt t2 in dem Zeitintervall [t1 - 10 min; t1 + 10 min] inbegriffen ist.

3. Verfahren nach Anspruch 1 oder 2, wobei das zweite Temperaturprogramm ein isothermes Programm ist.

4. Verfahren nach einem der Ansprüche 1 bis 3, wobei gemäß dem zweiten Temperaturprogramm die Temperatur des Harzes auf einem Wert gehalten wird, der in dem Temperaturintervall [Tg -20°C; Tg -10°C] inbegriffen ist.

5. Verfahren nach einem der Ansprüche 1 bis 4, wobei zum Zeitpunkt t2 die Geschwindigkeit der Temperaturerhöhung des Harzes zwischen 0,56°C/min und 3,3°C/min inklusive beträgt.

6. Verfahren nach einem der Ansprüche 1 bis 5, wobei das wärmehärtende Harz ein Epoxidharz ist.

7. Verfahren nach Anspruch 6, wobei das wärmehärtende Harz mindestens eine der folgenden Eigenschaften besitzt: es ist ein Harz Klasse 180°C, seine Zähigkeit ist verbessert, sein Tg entspricht zirka 155°C.

8. Verfahren nach einem der Ansprüche 1 bis 7, wobei die zweite Form analog zu der oder identisch mit der ersten Form ist.

9. Verfahren nach einem der Ansprüche 1 bis 8, wobei die Dauer t1-t0 etwa 30 Minuten beträgt.

## Claims

1. A method of molding a thermosetting resin, comprising, during a first stage:
filling a first mold with a thermosetting resin while causing the temperature of the resin to vary in compliance with a first temperature program, without exceeding a glass transition temperature Tg of the resin; and
after the first mold has been filled (t0), putting the resin under pressure while causing the temperature of the resin to vary in compliance with a second temperature program, without exceeding the glass transition temperature Tg of the resin, and detecting a drop in the pressure exerted by the resin on the mold by identifying the instant t1 when the pressure presents a break of slope; and
in a second stage:
filling a second mold with the thermosetting resin, while causing the temperature of the resin to vary in compliance with the first temperature program; and
after the second mold has been filled (t0), putting the resin under pressure while causing the temperature of the resin to vary in compliance with the second temperature program up to an instant t2 substantially equal to t1, and then from the instant t2, increasing the temperature of the resin so as to exceed the glass transition temperature Tg of the resin.

2. A method according to claim 1, wherein the instant t2 lies in the time interval [t1 - 10 min, t1 + 10 min].

3. A method according to claim 1 or claim 2, wherein the second temperature program is an isothermal program.

4. A method according to any one of claims 1 to 3, wherein, in the second temperature program, the temperature of the resin is held at a value lying in the temperature range [Tg - 20°C, Tg - 10°C].

5. A method according to any one of claims 1 to 4, wherein, at the instant t2, the rate at which the temperature of the resin increases lies in the range 0.56°C/min to 3.3°C/min.

6. A method according to any one of claims 1 to 5, wherein the thermosetting resin is an epoxy resin.

7. A method according to claim 6, wherein the thermosetting resin possesses at least one of the following properties: being a resin of class 180°C, having improved toughness, having Tg equal to about 155°C.

8. A method according to any one of claims 1 to 7, wherein the second mold is analogous or identical to the first mold.

9. A method according to any one of claims 1 to 8, wherein the duration t1-t0 is substantially 30 minutes.
